(19) Europäisches Patentamt

European Patent Office

Office européen des brevets

(11) EP 0 908 131 A1

(12) DEMANDE DE BREVET EUROPEEN

(43) Date de publication:
14.04.1999 Bulletin 1999/15

(51) Int Cl.⁶: **A47J 37/08**

(21) Numéro de dépôt: 98420171.5

(22) Date de dépôt: 02.10.1998

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **07.10.1997 FR 9712730**

(71) Demandeur: **SEB S.A.**
**69130 Ecully (FR)**

(72) Inventeur: **Mangel, Christian**
**88200 Remiremont (FR)**

(54) **Grille-pain a circuit electronique**

(57) La présente invention concerne une carte électronique pour grille-pain, disposant d'interrupteurs (2) ainsi que de moyens de sélections (5, 6), lesdits interrupteurs (2) et moyens de sélections (5, 6) étant susceptibles de générer chacun un signal analogique vers le microcontrôleur (1) où ledit signal est numérisé, ledit microcontrôleur (1) disposant de moyens susceptibles de déterminer la durée de grillage (Tf) du pain et la puissance à générer au niveau des moyens de chauffe selon des tables numérisées, situées dans la mémoire (4) du microcontrôleur (1) et paramétrées selon les signaux (ST1, ST2, ST3, ST4) provenant des interrupteurs (2) et moyens de sélections (5, 6), et où au moins l'un des signaux (ST3, ST4) provient d'un interrupteur (2) lié à la carte électronique et ne faisant pas saillie hors du bâti du grille-pain, ledit signal ou lesdits signaux ou leur combinaison permettant de ne sélectionner que certaines tables numérisées dans la mémoire du microcontrôleur (4) et correspondant à certains modes de fonctionnement du grille-pain.

FIGURE 1

## Description

La présente invention se rapporte au domaine des grille-pain et notamment à ceux contrôlés par un microcontrôleur.

L'invention concerne un grille-pain disposant d'un circuit électronique unique permettant de regrouper plusieurs fonctions possibles d'un grille-pain, de configurer l'appareil selon son pays destinataire, selon ses utilisations (fonctions), et dont la gamme de temps de grillage est présélectionnée selon des valeurs mises en mémoire dans un microcontrôleur et dépendant de la configuration du grille-pain et des souhaits de l'utilisateur, ces valeurs étant ajustées, lors de l'utilisation, en fonction de la température régnant, au départ du cycle de grillage, à l'intérieur de la chambre de cuisson.

L'utilisation d'un microcontrôleur est déjà connue dans le domaine des grille-pain. Le document US 5 128 521 décrit un tel grille-pain contrôlé par un microcontrôleur. Celui-ci permet notamment de gérer la durée de cuisson du pain. Les principaux paramètres de la durée de cuisson sont :

- le mode de cuisson : "toast", "pâtisserie" et "boulangerie". Dans ce dernier mode, la résistance centrale chauffe moitié moins que les résistances latérales,
- la couleur de cuisson,
- le temps d'arrêt depuis la dernière utilisation,
- le nombre de cycles précédents.

Les cycles et la durée de grillage sont contrôlés par des moyens numériques. Une valeur numérique, représentant le temps corrigé est périodiquement décrémentée. Lorsque cette valeur atteint une valeur prédéterminée, l'alimentation des moyens de chauffe est coupée.

Ce grille-pain possède une fonction de correction destinée à diminuer le temps de grillage initial lorsque le grille-pain est de nouveau utilisé sans avoir refroidi. En effet, après un ou plusieurs cycles de grillage, une nouvelle utilisation du grille-pain, avec les mêmes réglages qu'auparavant, nécessite un temps de grillage plus faible, compte tenu de la température initiale du grille-pain, plus élevée alors que lors de la précédente utilisation. Basé sur ce principe, le microcontrôleur, par l'intermédiaire de son compteur de temps interne, détermine l'intervalle de temps séparant deux utilisations du grille-pain pour déterminer la fonction de correction selon le paramètre de couleur de cuisson choisi.

Un des désavantages de ce procédé est l'absence d'information sur la température qui est le vrai paramètre de correction, puisque le système détermine uniquement l'intervalle de temps entre cycles, reflet du refroidissement du grille-pain, mais sans tenir compte de son environnement. De plus, lors de l'arrêt du grille-pain, l'information concernant l'intervalle de temps depuis la dernière utilisation est effacée et perdue. Lors d'une nouvelle mise en marche de l'appareil, et de façon systématique, la fonction de correction n'est pas appliquée et le pain risque de ne pas être grillé correctement, notamment lorsque le grille-pain n'a pas eu le temps de se refroidir depuis sa précédente utilisation.

Par ailleurs, la carte électronique associée n'a pas la possibilité d'être configurée selon les habitudes alimentaires du pays pour lequel le grille-pain est destiné. En effet, dans le grille-pain décrit dans ce document, tous les modes de cuisson sont présents sur la carte et disponibles pour l'utilisateur. Or il est connu que certains modes de cuisson ne sont utilisés que par les consommateurs de certains pays, soit par leurs habitudes alimentaires, mais aussi en fonction des types de pain disponibles.

Par ailleurs, certains consommateurs désirent d'autres modes de fonctionnement du grille-pain . Ainsi, selon le pays pour lequel il est destiné, il convient d'adapter le grille-pain pour ledit pays, afin de ne proposer que certaines fonctions répondant aux aspirations des utilisateurs. Cette adaptation nécessite de changer la carte électronique afin de l'adapter aux spécificités de chaque pays.

On connaît aussi, par le document US 4 170 932, un grille-pain équipé, dans la chambre de cuisson, d'un thermocouple, ce dernier délivrant une tension fonction de la température. Le principe repose sur la génération d'impulsions par variation de la tension délivrée par le thermocouple aux bornes d'un condensateur, ces variations de tension étant dues à des variations de température liées à l'assèchement progressif du pain. Le grillage du pain s'arrête lorsque le nombre d'impulsions généré est identique à une valeur déterminée, réglée par l'utilisateur. Ce procédé présente l'inconvénient majeur d'un réglage difficile pour des types de pain de composition et structure différentes. De plus, il ne permet pas d'obtenir des tranches de pain moelleuses, puisque son principe repose sur la montée en température après évaporation de l'eau contenue dans le pain.

La présente invention vise à remédier à ces inconvénients en fournissant un grille-pain, comportant un bâti, au moins une fente d'introduction du pain, un chariot porte pain, associé à un ressort de rappel, et mobile entre au moins une position de grillage et une position de déchargement du pain dans une chambre de chauffe à l'intérieur de laquelle s'étendent des moyens de grillage et/ou de réchauffage, des moyens pour déclencher le grillage du pain, un électro-aimant pour maintenir le chariot en position de grillage, un microcontrôleur associé à une carte électronique, caractérisé en ce que la carte électronique dispose d'interrupteurs ainsi que de moyens de sélections, lesdits interrupteurs et moyens de sélections étant susceptibles de générer chacun un signal analogique vers le microcontrôleur où ledit signal est numérisé, ledit microcontrôleur disposant de moyens susceptibles de déterminer la durée de grillage du pain et la puissance à générer au niveau des moyens de chauffe selon des tables numérisées, situées dans la mémoire du microcontrôleur et paramétrées selon les signaux provenant des interrupteurs et moyens de sélections, et où au moins l'un des signaux provient d'un interrupteur lié à la carte électronique et ne faisant pas saillie hors du bâti du grille-pain, ledit signal ou lesdits signaux ou leur combinaison permettant de ne sélectionner que certaines tables numérisées dans la mémoire du microcontrôleur et correspondant à certains modes de fonctionnement du grille-pain.

Un tel agencement permet notamment de pouvoir disposer en mémoire de nombreux modes de fonctionnement du grille-pain puis de n'en sélectionner que quelques uns à l'aide d'interrupteurs difficilement accessibles par l'utilisateur pour constituer des gammes de grille-pain adaptés aux habitudes des différents pays, et d'une manière générale adaptés à l'environnement de l'utilisateur. L'invention présente ainsi un intérêt économique important puisqu'une seule carte électronique permet de générer toute une gamme de grille-pain pouvant présenter des modes de fonctionnement différents simplement par une disposition particulière d'interrupteurs. Cette souplesse permet également d'adapter rapidement la carte et donc les grille-pain aux évolutions des goûts et des types de pain disponibles sur le marché, ou à de nouveaux pays, puisqu'une simple re-programmation des tables associées aux modes de cuisson et/ou éventuellement l'ajout d'autres interrupteurs, afin de multiplier les combinaisons possibles, permet de générer de nouveaux modes de fonctionnement.

Avantageusement, le microcontrôleur comporte également un capteur de température permettant de corriger les durées de grillage du pain et la puissance à générer au niveau des moyens de chauffe selon une fonction de compensation, calculée à partir de l'indication, par le capteur de température, de la température initiale dans la chambre de cuisson, ou de son image reproduite sur la carte électronique. Cette configuration permet de tenir compte de la température effective dans la chambre de cuisson, indépendamment de l'alimentation électrique.

Avantageusement, le microcontrôleur permet de commander l'alimentation des moyens de chauffe, ce qui permet d'éviter des composants spécifiques pour une telle fonction.

Dans un mode préférentiel de la présente invention, le microcontrôleur dispose d'un compteur de temps interne et est susceptible de générer un signal permettant de libérer le chariot et d'arrêter l'alimentation des résistances de chauffe lorsque la durée de grillage réelle a atteint la durée de grillage calculée, ladite durée de grillage réelle étant déterminée à l'aide du compteur de temps du microcontrôleur. Le terme microcontrôleur est ici à comprendre dans sa fonctionnalité, et tout autre dispositif, comportant un composant susceptible de gérer à partir d'un programme, une suite d'opérations définies, comme par exemple un ASIC, peut être utilisé sans sortir du cadre de la présente invention. De même ici, l'utilisation d'un microcontrôleur trouve tout son intérêt en présentant diverses possibilités d'intervention dans le fonctionnement général d'un grille-pain.

En particulier, l'état de l'un des signaux est lié à la fréquence du réseau électrique sur lequel le grille-pain est connecté, afin de corriger les durées de grillage réelles déterminées à l'aide du signal alternatif de la fréquence du réseau, ledit signal provenant d'un interrupteur lié à la carte électronique et ne faisant pas saillie hors du bâti du grille-pain.

Le microcontrôleur est en effet également utilisé en tant que temporisateur. A cette fin, un montage spécifique permet de détecter le passage à zéro du signal électrique provenant du réseau. Or la fréquence peut être différente selon le pays d'utilisation du grille-pain. Il est alors prévu, afin que la temporisation reste la même selon la fréquence du réseau, un signal provenant d'un interrupteur et permettant une correction sur la temporisation.

Avantageusement, un signal permet de moduler les temps de grillage, pour un même mode de fonctionnement et un même réglage de cuisson, selon le pays destinataire, ledit signal provenant d'un interrupteur lié à la carte électronique et ne faisant pas saillie hors du bâti du grille-pain.

Il est en effet remarquable de constater qu'une même valeur de réglage de grillage pour une fonction donnée du grille-pain aboutit à un résultat différent, tant au niveau qualité du produit qu'au niveau de la satisfaction de l'utilisateur, selon le pays destinataire. Les différents types de pain, les habitudes alimentaires, le goût ..., permettent d'expliquer ces différences qui peuvent être généralisées par pays, ou par groupes de pays.

Cette notion permet d'affiner la première sélection des modes de fonctionnement du grille-pain. En effet, un même mode de fonctionnement peut être souhaité pour des pays différents où il est nécessaire, compte tenu des habitudes alimentaires et des types de pain disponibles, de nuancer et d'affiner les paramètres de cuisson afin d'adapter le grille-pain à son "environnement".

Selon l'invention, une valeur correspondant à l'un des modes de fonctionnement du grille-pain parmi les modes déterminés par les signaux, ainsi qu'une valeur f correspondant au degré de grillage souhaité par l'utilisateur, proviennent des moyens de sélection possédant une partie faisant saillie hors du bâti du grille-pain en étant associée à un système d'indexage permettant à l'utilisateur de choisir aisément le mode de fonctionnement parmi un choix restreint ainsi que le degré de grillage du pain.

Un autre objet de la présente invention est de fournir, sur un grille-pain équipé d'un microcontrôleur, en permanence, l'information sur la température à l'intérieur de la chambre de cuisson afin d'établir une fonction de correction des temps de grillage selon la température initiale dans la chambre de cuisson. Cette information est disponible même après un arrêt momentané de l'appareil. Ainsi, par le grille-pain électronique équipé de la présente invention, les tranches de pain sont grillées de façon optimale, en respectant au mieux les souhaits de l'utilisateur et en prenant en compte l'historique thermique du grille-pain, afin d'ajuster les temps de grillage.

Avantageusement, la mesure de température s'effectue à l'aide d'une thermistance, permettant une détermination précise de la température par la variation importante de la valeur de résistance présentée par cet élément. Ce paramètre électrique peut être intégré de différentes façons dans une chaîne de mesure afin de déterminer sa valeur. La température est mesurée à l'intérieur même de la chambre de cuisson ou par son image, reproduite sur l'électronique de commande.

En utilisant une thermistance, la fonction de compensation est alors paramétrée selon la position du sélecteur déterminant le degré de grillage du pain et selon la valeur de résistance de la thermistance, ladite fonction étant mémorisée dans la mémoire interne du microcontrôleur. L'ajout de la position du sélecteur de qualité de grillage comme paramètre de la fonction de correction permet d'affiner cette correction.

Dans une configuration avantageuse du grille-pain, le microcontrôleur, lors d'un cycle de grillage, est susceptible de mesurer, à intervalles de temps réguliers, l'état des sélecteurs afin de recalculer la durée de grillage lorsqu'une modification, par l'utilisateur, des paramètres influant cette durée de grillage a lieu. Ainsi, lorsqu'un cycle de grillage est en cours, l'utilisateur peut, à tout moment, modifier les paramètres disponibles de grillage : ceux-ci seront pris en compte par le microcontrôleur qui réajustera la durée de grillage du cycle en cours en fonction des nouveaux paramètres.

D'autres particularités et avantages de la présente invention apparaîtront et ressortiront plus en détail, à la lecture de la description faite ci-après, présentant un mode de réalisation de la présente invention, en référence aux dessins annexés, donnés à titre d'exemples non limitatifs, dans lesquels :

- la figure 1 représente les moyens de commande du grille-pain selon l'invention sous forme de blocs fonctionnels,

- la figure 2 représente le principe électrique destiné à déterminer la valeur de la résistance présentée par un potentiomètre de réglage,

- la figure 3 représente le principe électrique destiné à déterminer la valeur de la résistance de la thermistance utilisée,

- la figure 4 représente l'allure générale de la fonction de compensation,

- la figure 5 représente le schéma d'implantation des composants de la carte électronique de contrôle par microcontrôleur équipant le grille-pain.

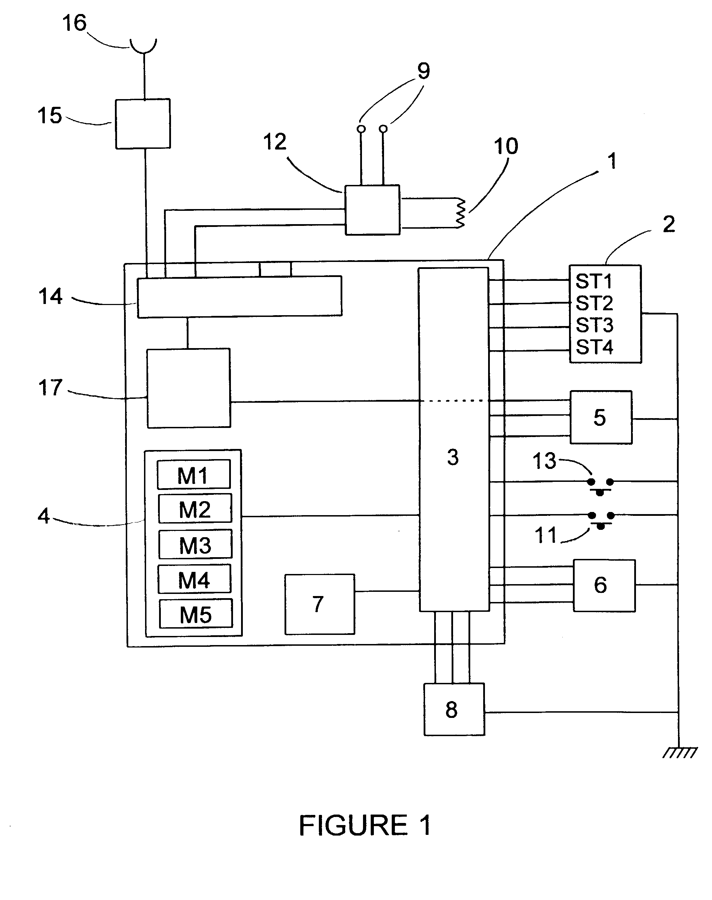

Selon la figure 1, l'architecture de commande destinée à équiper un grille-pain, non représenté, comporte, schématisé, un microcontrôleur 1, un ensemble de quatre interrupteurs 2, permettant de générer un signal noté ST1 à ST4. Ces interrupteurs sont destinés à sélectionner, lors du montage de l'appareil, les fonctions disponibles ainsi que le pays destinataire du grille-pain. Avantageusement, ces interrupteurs sont amovibles afin de faciliter leur montage. Ces interrupteurs permettent de générer un signal électrique binaire (selon les niveaux de tension) vers la cellule de temporisation 3 qui, via des moyens de mémorisation 4 des différents temps de grillage, permet au microcontrôleur de sélectionner le temps correspondant au signal reçu et codé sur 4 bits. La table suivante présente, selon les pays destinataires, le code binaire sur les signaux ST1 et ST2.

| Pays | ST1 | ST2 |
|---|---|---|
| Europe 50 Hz | 1 | 0 |
| Europe 60 Hz | 0 | 0 |
| Angleterre 50 Hz | 1 | 1 |
| Etats-Unis 60 Hz | 0 | 1 |

Le signal ST1 permet de tenir compte de la fréquence du réseau électrique sur lequel le grille-pain est branché. En effet, la fonction de temporisation utilise une détection du passage à zéro de la fréquence du réseau. Cette détection permet d'incrémenter un compteur de temps calibré sur une fréquence de 50 Hz. Dès lors, si le grille-pain est à destination d'un pays dont la fréquence du réseau est différente de 60 Hz, la fonction de temporisation doit être corrigée. Le signal ST1 permet une telle correction en "indiquant" au microcontrôleur quelle fréquence est utilisée, le microcontrôleur corrigeant ou non les tables en mémoire selon ce signal.

Le signal ST2 permet de différencier, dans l'exemple proposé, les pays dits "anglo-saxons" des autres pays d'Europe. En effet, les habitudes de grillage du pain, en Angleterre et aux Etats-Unis, sont différentes des autres pays essentiellement par la nature du pain qui est essentiellement du pain de mie très moelleux nécessitant des temps de grillage différents. Ainsi, pour une même fonction d'un grille-pain et un même réglage de grillage, le temps ne sera pas le même selon que le grille-pain est à destination d'un pays anglosaxon ou d'un autre pays.

Cette notion peut être étendue à d'autres pays sans sortir du cadre de la présente invention. Il suffit en effet d'utiliser un ou plusieurs autre(s) interrupteur(s) pour multiplier les combinaisons possibles et de relier ces combinaisons à des tables spécifiques dans la mémoire du microcontrôleur.

Une seconde table, ci-dessous, présente selon le choix de la fonction de base, le code binaire présent sur ST3 et ST4.

| Fonction de base | ST3 | ST4 |
|:---:|:---:|:---:|
| Rapide | 0 | 0 |
| Standard | 1 | 0 |
| Multisaveur | 0 | 1 |
| Types de pain | 1 | 1 |

Les grille-pain sont ainsi différenciés selon leur destination et selon les modes de fonctionnement de chacun. Les signaux STI à ST4 proviennent d'interrupteurs physiquement intégrés à la carte électronique lors du montage en usine. Dans une même catégorie de grille-pain, un choix de trois modes de fonctionnement est possible, le choix s'effectuant par l'utilisateur, à l'aide du potentiomètre P2 intégré dans le bloc 5 de sélection de la fonction. Selon le choix et la catégorie de grille-pain, un mode de fonctionnement est ainsi sélectionné, selon le tableau ci-dessous.

| | Rapide | Standard | Multisaveur | Types de pain |
|:---:|:---:|:---:|:---:|:---:|
| Choix 1 | Réchauffage | Réchauffage | 100% | Mie |
| Choix 2 | Rapide | Standard | 75% | Baguette |
| Choix 3 | Décongélation | Décongélation | 50% | Viennoiserie |

Un deuxième potentiomètre P1, intégré au bloc de sélection 6, est à la disposition de l'utilisateur, lui permettant de régler le degré de grillage.

Le microcontrôleur est équipé d'un compteur de temps interne 7. Sur la figure 1 sont également représentés un interrupteur de cycle 11 permettant, à tout instant d'interrompre le cycle de grillage en cours et d'éjecter le pain, un interrupteur 13 déclenchant le cycle de grillage, pouvant être un bouton actionné par l'utilisateur ou simplement un interrupteur déclenché par le chariot porte pain lorsqu'il se trouve en position basse. Avantageusement, le circuit d'alimentation des moyens de chauffe n'est fermé que sur commande du microcontrôleur.

Afin de disposer de niveaux suffisants de courant, une cellule d'amplification des sorties 14 permet de commander un bloc de relais de cyclage 12 ainsi que l'électro-aimant 15 qui est responsable du maintien en position basse du chariot porte pain 16.

L'alimentation électrique est représentée en 9 et permet, notamment, par l'intermédiaire du bloc de relais 12 l'alimentation d'au moins une résistance de chauffe 10. Selon la fonction choisie ainsi que le type de grille-pain, la puissance de chauffe peut être amenée à varier, par l'intermédiaire d'une cellule 17 commandant le bloc de relais de cyclage. Cette cellule est notamment active pour la catégorie des grille-pain "multisaveur".

Selon le choix effectué par l'utilisateur, le rapport de cyclage est modifié. Ainsi, pour une sélection du choix 2, le rapport de cyclage, établi à 75%, signifie que le cycle de chauffe sera interrompu pendant 25% du temps total. Etant donné que les cycles utilisés ont une durée de 6s, la durée de chauffe sera alors de 4,5s par cycle.

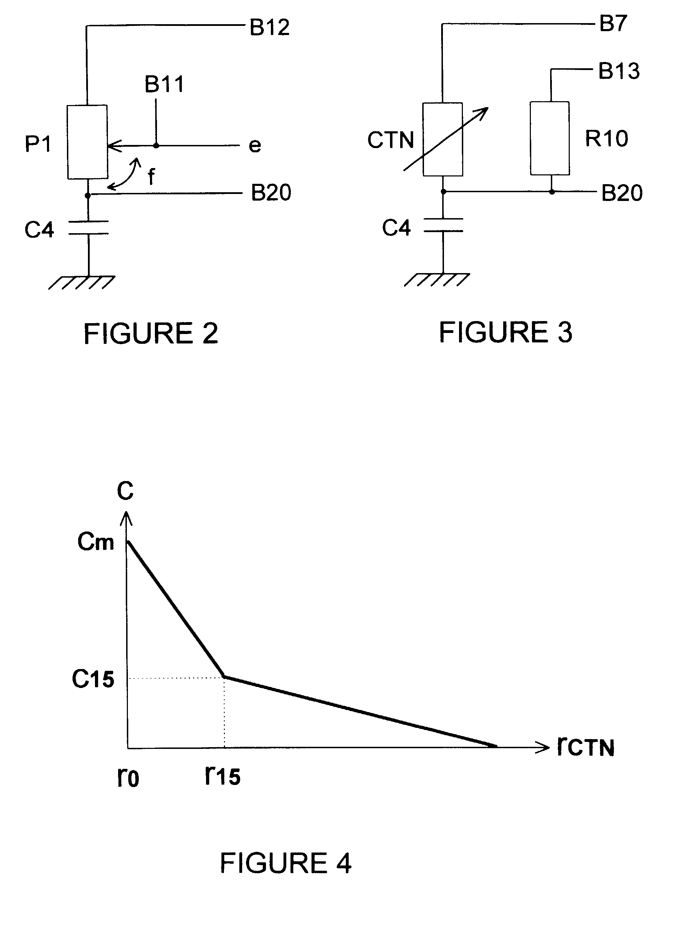

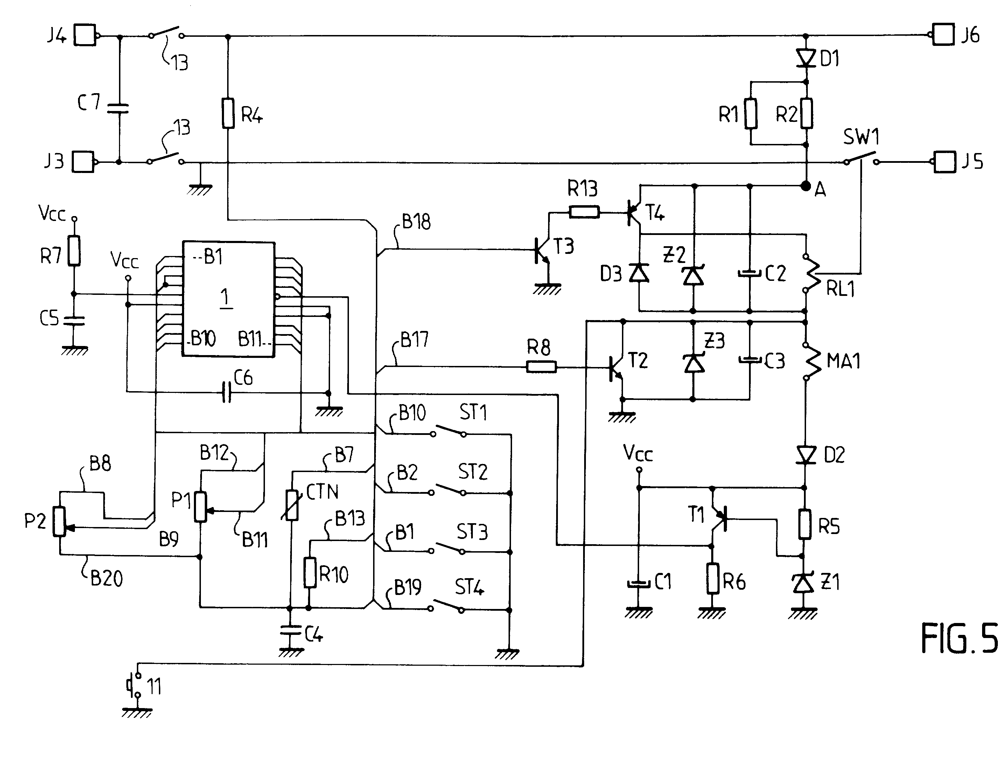

Afin de rendre numérique l'indication fournie par le potentiomètre P1, la structure électrique de la figure 2 est utilisée, qui est donc la structure du bloc fonctionnel 6 de la figure 1. Sur cette figure, les notations B12, B11 et B20 correspondent aux broches du microcontrôleur selon la figure 5, qui sont les ports d'entrée-sortie auxquels sont connectées les liaisons électriques présentées. Le principe de la mesure repose sur la détermination du temps de charge d'un condensateur à travers une résistance variable, cette variation de résistance étant due au réglage effectué par l'utilisateur. Les séquences suivantes sont ainsi générées par le microcontrôleur, compte tenu du positionnement e du curseur de P1 :

- mise en haute impédance des ports B12 et B11 puis mise à l'état bas du port B20 afin de décharger le condensateur C4,
- mise en haute impédance des ports B11 et B20 puis mise à l'état haut du port B12 afin de charger le condensateur C4 à travers la résistance P1 jusqu'à l'état haut du port B20. Le temps de charge est noté T1P,
- réinitialisation du système par la mise en haute impédance des ports B12, B11 et mise à l'état bas du port B20 afin de décharger le condensateur C4,
- mise à l'état haut de B11 et charge de C4 à travers une fraction de P1, notée f, jusqu'à l'état haut du port B20. Le temps de charge est noté T2P.

Les deux charges s'effectuant sur la même résistance et le même condensateur, le rapport des temps T2P/T1P est égal à la fraction f, comprise entre 0 et 1. Cette méthode permet de s'affranchir de la dispersion rencontrée sur les valeurs de résistance du potentiomètre, de l'ordre de 20%. Le compteur de temps 7 du microcontrôleur permet de déterminer les deux temps T1P et T2P entre le début de la charge du condensateur C4 et le passage à l'état 1 du port B20 et donc la fraction f qui est représentative de la position du curseur.

Ainsi, pour régler le degré de grillage du pain, le potentiomètre utilisé est un potentiomètre de 250° d'angle électrique. Pour notre application, les correspondances entre les différentes échelles sont représentées sur le tableau suivant :

| Angle électrique | 0 | 47,5° | 95° | 142,5° | 190° | 237,5° |
|---|---|---|---|---|---|---|
| Position curseur | 1 | 2 | 3 | 4 | 5 | 6 |
| valeur de f | 0 | 0,19 | 0,38 | 0,57 | 0,76 | 0,95 |
| valeur de f stockée | 0 | 48 | 97 | 145 | 194 | 242 |

La valeur de f stockée dans un module M1 de mémoire (4) correspond à un codage sur 8 bits de l'angle électrique.

Comme il est indiqué sur ce tableau, l'utilisateur peut positionner le curseur entre les positions 1 et 6 où l'une des positions extrêmes, arbitrairement 1, correspond à un temps de chauffe minimal, tandis que l'autre position extrême, 6, correspond à un temps de chauffe maximal. Il existe 48 réglages possibles du degré de grillage entre chaque position du curseur, permettant un réglage fin et optimal du temps de grillage du pain.

La position du curseur détermine le temps de grillage. Celui-ci est dépendant des indications fournies par ST1 à ST4 ainsi que par le choix de la fonction, afin de tenir compte des goûts des utilisateurs ainsi que des spécificités électriques des différents pays. La combinaison des signaux ST1 à ST4 représentant 16 possibilités, compte tenu des 3 choix possibles à l'intérieur d'une même catégorie de grille-pain, il existe donc 48 courbes représentant le temps de grillage en fonction de la position du curseur de sélection du degré de grillage. Pour le confort de l'utilisateur, cette courbe présente deux segments linéaires, le premier présentant une faible pente de la position 1 à la position 4, le second présentant une pente plus importante de la position 4 à la position 6. Une telle courbe est donc décrite par trois paramètres : le temps de grillage Tf1 pour la position 1, la pente pf1 pour une position inférieure ou égale à 4, la pente pf2 pour une position supérieure à la position 4. Ces trois valeurs sont mémorisées en mémoire M2 de la mémoire 4 du microcontrôleur. Ce sont les paramètres permettant de déterminer les temps de grillage "à froid" Tf du grille-pain, qui sont les temps appliqués lorsque le grille-pain s'est complètement refroidi d'une précédente utilisation.

Le potentiomètre P2 est de nature identique à P1. Le principe de la sélection consiste à partager arbitrairement l'angle électrique de 250° selon le nombre de secteurs correspondant au nombre de choix disponibles (3 dans notre cas), chaque secteur étant attribué à l'un des choix de fonction. Ainsi pour un angle compris entre 0° et 95°, le choix 1 est sélectionné, pour un angle compris entre 95° et 158°, le choix 2 est sélectionné, enfin, pour un angle compris entre 158° et 250°, le choix 3 est activé. Il est bien évident que l'attribution des plages angulaires est arbitraire et correspond essentiellement à un confort d'utilisation. L'angle ainsi sélectionné par l'utilisateur, selon la fonction qu'il désire utiliser, est codé sur 8 bits par l'intermédiaire des ports B8, B9, B20, selon le même procédé expliqué précédemment pour le réglage du degré de grillage. Ainsi, le paramètre g, compris entre 0 et 1, représente la fraction sélectionnée par l'utilisateur du potentiomètre P2 par la position de son curseur. Cette valeur g est codée sur 8 bits et est comparée aux plages d'attribution, mises en mémoire dans un module M3 de mémoire 4 du microcontrôleur. Cette attribution est donc purement liée à la programmation du microcontrôleur et peut donc être modifiée à volonté si le nombre de choix est amené à augmenter, par exemple.

Le grille-pain possède, par ailleurs, une mesure de la température située au niveau des résistances R1 et R2 présentées figure 5. Cette configuration permet d'avoir une image fidèle de la température à l'intérieur de la chambre de cuisson puisque les résistances R1 et R2 sont sollicitées de façon identique aux résistances de chauffe connectées en J5 et J6. R1 et R2 subissent donc un échauffement, lorsque les résistances de chauffe sont alimentées, qui reflète la température régnant à l'intérieur de la chambre de cuisson. La figure 3 décrit plus précisément le module 8 de la figure 1 qui comprend le capteur de température 18. Celui-ci est une thermistance à coefficient de température négatif, couramment appelé élément CTN, mais ce peut être tout autre capteur de température.

La prise en compte de la valeur de la résistance de cet élément CTN, donc de la température, est déterminée comme suit, selon un modèle analogue à la lecture des potentiomètres P1 et P2 :

- mise en haute impédance des ports B7 et B13 et mise à l'état bas du port B20 afin de décharger le condensateur C4 pour initialiser le système,
- mise en haute impédance des ports B7 et B20 et mise à l'état haut du port B13 afin de charger le condensateur C4 à travers la résistance R10 jusqu'à l'état haut du port B20, le temps de charge étant noté T1C,
- réinitialisation du système par la mise en haute impédance des ports B7 et B13 et mise à l'état bas du port B20 afin de décharger le condensateur C4,
- mise en haute impédance des ports B13 et 820 et mise à l'état haut du port 87 afin de charger le condensateur C4 à travers la résistance $r_{CTN}$ présentée par l'élément CTN, jusqu'à l'état haut du port B20, le temps de charge est noté T2C.

Les deux charges s'effectuant sur le même condensateur, le rapport des temps T2C/T1C est égal au rapport des résistances $r_{CTN}$ /R10. la connaissance de R10 ainsi que la mesure des temps T2C et T1C par le compteur de temps du microcontrôleur permet la détermination de $r_{CTN}$, donc de la température.

La mesure d'une telle température, avant le début d'un cycle de chauffe, permet de corriger le temps de grillage sélectionné comme précédemment expliqué par une fonction appelée fonction de compensation c qui représente la fraction du temps calculé à froid qu'il faut soustraire pour tenir compte de l'historique thermique du grille-pain. Ainsi, lorsqu'un temps Tf est déterminé, si le grille-pain vient d'être utilisé, une fonction c de compensation, comprise entre 0 et 1 est introduite pour déterminer le temps de grillage réel Tr défini par :

$$Tr = Tf(1-c)$$

En effet, lorsque l'appareil est chaud, c'est à dire lorsqu'il vient d'être utilisé, une nouvelle utilisation nécessite, pour les mêmes réglages de grillage par l'utilisateur, une durée de grillage Tr moins importante que la durée initialement prévue Tf. Cette différence Tr-Tf dépend de la température de la chambre de cuisson. Les durées Tf et Tr sont identiques lorsque l'appareil est initialement froid (c=0, noté $c_0$ sur la figure 4), et présentent un écart d'autant plus important que la température de l'appareil est élevée, par augmentation de la valeur de c.

La figure 4 présente le modèle utilisé pour la fonction compensation. Cette fonction, représentant la compensation c en fonction de la résistance de l'élément CTN, a une allure généralement décroissante. En effet, comme son nom l'indique, l'élément CTN voit sa valeur ohmique diminuer lorsque la température augmente. De ce fait, une valeur faible de $r_{CTN}$ indique une température élevée dans la chambre de cuisson, d'où la nécessité d'une compensation importante de la durée de grillage. La courbe permettant d'obtenir les valeurs de c selon la résistance de l'élément CTN est représentée par deux portions linéaires de pente respective pc1 et pc2. La première portion, correspondant à des températures élevées, donc à des résistances $r_{CTN}$ faibles, présente une pente pc1 inférieure à pc2 car le besoin de compensation est important puisque la chambre de cuisson présente une température élevée. Le changement de pente est figé pour une compensation de 0,15, notée $c_{15}$ sur la figure 5, correspondant à une valeur $r_{15}$ de la résistance de l'élément CTN.

Ainsi, pour chaque pays et type d'appareil, trois paramètres sont ainsi mémorisés dans un module M4 de mémoire (4) du microcontrôleur : pc1, pc2 et $c_m$, valeur maximale de compensation pour $r_{CTN} = 0$, notée $r_0$ sur la figure. Le principe de calcul de la compensation est le suivant :

- mesure de $r_{CTN}$
- calcul de la compensation $c_1 = c_m - [r_{CTN} \times pc1]$
- si $c_1$ calculée est supérieure à 0,15, celle-ci est conservée comme valeur c de compensation, sinon la compensation c est déterminée par

$$c = 0,15 - pc2 \times [r_{CTN} - r_{15}] \text{ où } r_{15} = (c_m - 0,15)/pc1$$

La valeur $c_m$ est paramétrée linéairement selon la position du curseur définissant le degré de grillage souhaité.

Pour chaque fonction et pays, il existe donc 2 valeurs stockées dans un module M5 de mémoire (4) du microcontrôleur : la valeur $c_m(1)$, correspondant à la compensation maximale pour la position 1 du curseur, et la pente p. Ainsi, pour une position donnée du curseur définissant le degré de grillage, la valeur cm est définie par :

$$c_m = c_m(1) - [(f \times 0,19)/p].$$

Le temps de grillage réel est donc le temps de grillage "à froid" compensé par la fonction c. Ce temps réel est comparé à un compteur initialement à 0 au démarrage d'un cycle, et incrémenté temporellement selon une base de temps, gérée par le compteur de temps (7) du microcontrôleur. Ce compteur représente la durée du cycle en cours. Lorsque la valeur du compteur est supérieure au temps de grillage réel calculé, le cycle de grillage est interrompu.

Selon la base de temps, le microcontrôleur prend connaissance des paramètres influant la durée de grillage afin de corriger celle-ci lorsque l'utilisateur modifie l'un des paramètres au cours d'un cycle de grillage.

La figure 5 présente l'implantation physique des composants permettant un mode de réalisation de la présente invention. L'alimentation est réalisée à partir de la tension secteur amenée sur les connecteurs J3 et J4. Les connecteurs J5 et J6 sont en liaison avec la charge. Le connecteur J6 est lié à J4 par l'interrupteur double (13). Par l'intermédiaire de la diode D1, montée en série avec les résistances R1 et R2 montées en parallèle, une tension de 50V est présente au point A, lorsque l'interrupteur (13) est fermé.

Les 3 postes importants de consommation de courant sont représentés par :

- le relais RL1 de pilotage des éléments chauffants, via l'interrupteur SW1,
- l'alimentation MA1 de l'électro-aimant assurant à la fois le maintien du chariot en position basse ainsi que la fermeture des contacts de l'interrupteur (13) autorisant l'alimentation des éléments chauffants,
- l'alimentation Vcc du microcontrôleur

Le microcontrôleur (5) utilisé comporte 20 broches numérotées B1 à B20 sur la figure 5.

Le relais RL1 est piloté par la sortie B18 du microcontrôleur. Celle-ci est reliée à la base d'un transistor T3 dont l'émetteur est relié à la masse et le collecteur, via une résistance R13, est relié à la base d'un transistor T4. L'émetteur de celui-ci est relié au point A tandis que son collecteur est relié à une borne d'alimentation du relais RL1. De l'autre borne d'alimentation de ce relais partent trois connexions : une, vers une diode D3 dont l'autre extrémité est reliée au collecteur de T4, ainsi que deux connexions en parallèle d'une diode Zéner Z2 et d'une capacité C2 connectées à l'émetteur de T4. Ainsi, le signal présent sur B18 permet de commander T4. Lorsque T4 est passant, RL1 est alimenté, lorsqu'il est bloqué, le courant nécessaire à MAI et Vcc est dérivé dans Z2.

L'électro-aimant est piloté par la sortie B17 du microcontrôleur. Celle-ci est reliée, par une résistance R8, à la base d'un transistor T2 dont l'émetteur est relié à la masse. Une diode Zéner Z3 ainsi qu'une capacité C3 sont montées en parallèle entre l'émetteur et le collecteur de ce transistor. Le collecteur de T2 est relié à une borne d'alimentation de l'électro-aimant MA1, borne commune avec une des bornes d'alimentation de RL1. Lorsque T2 est bloqué, MA1 est alimenté. Par contre, lorsque T2 est passant, l'électro-aimant est court-circuité, le chariot porte pain est alors libéré, les contacts électriques ouverts, terminant le cycle de grillage.

L'interrupteur de cycle (11) est destiné à éjecter le pain. Une de ses bornes est reliée à la masse, tandis que l'autre est reliée à l'une des bornes de MA1, de sorte que son action court-circuite l'électro-aimant, libérant le chariot et interrompant l'alimentation électrique des éléments de chauffe.

On retrouve, sur la figure 5, les signaux ST1 à ST4 provenant d'interrupteurs connectés respectivement aux broches B10, B2, B1 et B19 du microcontrôleur d'une part, et d'autre part à la masse. Les éléments P1, P2, R10, C4 et CTN sont connectés conformément aux figures 2 et 3 et selon la description faite jusqu'ici.

Le schéma de l'alimentation Vcc n'a pas été représenté. Ce schéma, ainsi que la fonction réinitialisation, dont le schéma électrique est représenté par la diode D2, les résistances R5 et R6, la diode Zéner Z1 et la capacité C1, sont des schémas préconisés par le fabricant du microcontrôleur et ne sont pas ici une spécificité de la présente invention.

Le fonctionnement d'un tel appareil peut être décrit par les séquences suivantes :

①l'utilisateur dispose d'un appareil dont les interrupteurs générant les signaux ST1 à ST4 ont été judicieusement positionnés en usine, selon le pays où le grille-pain va être commercialisé et selon le modèle de grille-pain utilisé, lesdits signaux binaires ST1 à ST4 étant générés respectivement sur les broches B10, B2, B1 et B19 du microcontrôleur,

②l'utilisateur positionne le curseur du potentiomètre P2 selon l'une des trois fonctions disponibles, dépendant de la gamme de grille-pain dont il dispose, la broche B9 du microcontrôleur permettant de récupérer le signal correspondant à ce choix, noté g

③l'utilisateur règle alors le degré de grillage ou de cuisson souhaité, à l'aide du curseur du potentiomètre P1, entre la position 1 et la position 6. De même ici, la broche B11 du microcontrôleur permet de récupérer le signal correspondant à la position de grillage adoptée, notée f

④lorsque le chariot porte pain est amené en position basse par l'utilisateur, le microcontrôleur déclenche alors l'alimentation générale de la carte électronique. Les signaux correspondant aux différents réglages sont générés. Les signaux ST1 à ST4 et g, générés sur les broches B10, B2, B1, B19 et B9 déterminent, grâce à une table paramétrée selon ces 5 paramètres et mémorisée par les moyens de mémorisation 4 du microcontrôleur :

- d'une part les valeurs de grillage ou de cuisson pour les positions 1, 4 et 6 du potentiomètre P1, ainsi que les valeurs $c_m(1)$ et p de la fonction de compensation
- d'autre part la puissance de chauffe à appliquer, par l'intermédiaire de la cellule 17 commandant le bloc 12 de relais de cyclage,

⑤selon la valeur f déduite du signal généré sur la broche B11 du microcontrôleur, le temps de grillage à froid est interpolé linéairement selon les valeurs de grillage ou de cuisson pour les positions 1, 4 et 6 du potentiomètre P1, Il est important de noter que la temporisation est conçue à l'aide de la fréquence du réseau, par le passage à zéro de ce signal. Ainsi, pour certains pays anglo-saxons dont la fréquence est de 60 Hz, il convient de corriger les tables mémorisées dans la mémoire du microcontrôleur, puisque le référentiel de base de temps a changé. Le signal ST1 permet de corriger les tables établies pour une fréquence de 50 Hz.

⑥le microcontrôleur détermine alors la valeur maximale $c_m$ de la fonction de correction, selon l'indication f du degré de grillage (par le signal sur la broche B11),

⑦compte tenu du signal présent sur la broche B7, fonction de la résistance présentée par l'élément CTN et reflet de la température régnant à l'intérieur de la chambre de cuisson, déterminée à l'aide de la procédure décrite précédemment, la fonction de correction c est calculée. Le temps de grillage réel Tr est alors le temps de grillage à froid Tf modéré par la fonction de correction,

⑥le microcontrôleur déclenche alors l'alimentation des éléments chauffants. Dans le même temps, un compteur initialisé à 0 est déclenché.

⑨environ toutes les deux secondes (selon la fréquence), ce compteur est incrémenté. Cet intervalle est défini arbitrairement à deux secondes. Il peut être choisi à une autre valeur sans sortir du cadre de la présente invention.

Lorsque le compteur affiche une valeur supérieure au temps de grillage Tr déterminé, le cycle de grillage s'arrête, le microcontrôleur coupant l'alimentation de la bobine de l'électro-aimant retenant le chariot porte pain qui peut alors remonter vers une position de déchargement du pain, tout en coupant l'alimentation des éléments chauffants et du microcontrôleur lui-même.

Par ailleurs, lors d'un cycle de grillage, environ toutes les deux secondes, (selon la fréquence utilisée), les paramètres sélectionnés par l'utilisateur (degré de grillage et choix de la fonction), influençant le temps de grillage, sont à nouveau déterminés par le microcontrôleur, et une nouvelle durée de grillage est éventuellement calculée lorsque ces paramètres ont été modifiés. Cette éventuelle nouvelle durée remplace la durée initialement prévue, et ceci, bien que le cycle de grillage ait débuté. Ainsi, même des modifications tardives, par l'utilisateur, des paramètres de grillage, sont prises en considération pour le calcul de la durée de grillage du cycle en cours, permettant de respecter au mieux les souhaits de l'utilisateur.

Il est à noter que les étapes de commande de l'alimentation et de l'arrêt des moyens de chauffe ainsi que de la remontée du chariot porte pain peuvent être réalisés par des moyens traditionnels et couramment rencontrés dans la mise en oeuvre de tels appareils, sans recours à un contrôle par microcontrôleur, sans sortir du cadre de la présente invention.

Toutefois, l'utilisation d'un microcontrôleur pour gérer l'ensemble des fonctions d'un grille-pain permet d'adapter facilement de nouvelles fonctions et/ou d'étendre celles existantes, simplement par une nouvelle programmation du microcontrôleur et/ou par ajouts de simples interrupteurs.

## Revendications

1. Grille-pain, comportant un bâti, au moins une fente d'introduction du pain, un chariot porte pain (16), associé à un ressort de rappel, et mobile entre au moins une position de grillage et une position de déchargement du pain dans une chambre de chauffe à l'intérieur de laquelle s'étendent des moyens de grillage et/ou de réchauffage (10), des moyens pour déclencher le grillage du pain, un électro-aimant (15) pour maintenir le chariot en position de grillage, un microcontrôleur (1) associé à une carte électronique, caractérisé en ce que la carte électronique dispose d'interrupteurs (2) ainsi que de moyens de sélections (5, 6), lesdits interrupteurs (2) et moyens de sélections (5, 6) étant susceptibles de générer chacun un signal analogique vers le microcontrôleur (1) où ledit signal est numérisé, ledit microcontrôleur (1) disposant de moyens susceptibles de déterminer la durée de grillage (Tf) du pain et la puissance à générer au niveau des moyens de chauffe selon des tables numérisées, situées dans la mémoire (4) du microcontrôleur (1) et paramétrées selon les signaux (ST1, ST2, ST3, ST4) provenant des interrupteurs (2) et moyens de sélections (5, 6), et où au moins l'un des signaux (ST3, ST4) provient d'un interrupteur (2) lié à la carte électronique et ne faisant pas saillie hors du bâti du grille-pain, ledit signal ou lesdits signaux ou leur combinaison permettant de ne sélectionner que certaines tables numérisées dans la mémoire du microcontrôleur (4) et correspondant à certains modes de fonctionnement du grille-pain.

2. Grille-pain selon la revendication 1, caractérisé en ce que le microcontrôleur comporte également un capteur de température (18) permettant de corriger les durées de grillage (Tr) du pain et la puissance à générer au niveau des moyens de chauffe selon une fonction de compensation (c), calculée à partir de l'indication, par le capteur de température (18), de la température initiale dans la chambre de cuisson, ou de son image reproduite sur la carte électronique.

3. Grille-pain selon l'une des revendications précédentes, caractérisé en ce que la commande de l'alimentation (9) des moyens de chauffe (10) est réalisée par le microcontrôleur (1).

4. Grille-pain selon l'une des revendications précédentes, caractérisé en ce que le microcontrôleur (1) disposant d'un compteur de temps interne (7), est susceptible de générer un signal permettant de libérer le chariot (16) et d'arrêter l'alimentation (9) des moyens de chauffe (10) lorsque la durée de grillage réelle a atteint la durée de grillage calculée (Tr), ladite durée de grillage réelle étant déterminée à l'aide du compteur de temps (7) du microcontrôleur (1).

5. Grille-pain selon l'une des revendications précédentes, caractérisé en ce que l'état du signal ST1 est lié à la fréquence du réseau électrique sur lequel le grille-pain est connecté, afin de corriger les durées de grillage réelles déterminées à l'aide du signal alternatif de la fréquence du réseau, ledit signal STI provenant d'un interrupteur lié à la carte électronique et ne faisant pas saillie hors du bâti du grille-pain.

6. Grille-pain selon l'une des revendications précédentes, caractérisé en ce que le signal ST2 permet de moduler les temps de grillage, pour une même fonction et un même réglage de cuisson, selon le pays destinataire, ledit signal ST2 provenant d'un interrupteur lié à la carte électronique et ne faisant pas saillie hors du bâti du grille-pain.

7. Grille-pain selon l'une des revendications précédentes, caractérisé en ce qu'une valeur g correspond à l'un des modes de fonctionnement du grille-pain parmi les modes déterminés par les signaux (ST3, ST4), ainsi qu'une valeur f correspondant au degré de grillage souhaité par l'utilisateur proviennent des moyens de sélection (5, 6) possédant une partie faisant saillie hors du bâti du grille-pain en étant associée à un système d'indexage permettant de choisir le mode de fonctionnement ainsi que le degré de grillage du pain.

8. Grille-pain selon l'une des revendications précédentes, caractérisé en ce que la mesure de température s'effectue à l'aide d'une thermistance.

9. Grille-pain selon l'une des revendications précédentes, caractérisé en ce que la fonction de compensation (c) est paramétrée selon la position du sélecteur (6) déterminant le degré de grillage du pain et selon la valeur de résistance ($r_{CTN}$) de la thermistance, ladite fonction c étant mémorisée dans la mémoire interne (4) du microcontrôleur (1).

10. Grille-pain selon l'une des revendications précédentes, caractérisé en ce que le microcontrôleur (1), lors d'un cycle de grillage, est susceptible de mesurer, à intervalles de temps réguliers, l'état des sélecteurs (5, 6) afin de recalculer la durée de grillage (Tr) lorsqu'une modification, par l'utilisateur, des paramètres influant cette durée de grillage a lieu.

FIGURE 1

B12

B11

P1

e

f

B20

C4

FIGURE 2

B7

B13

CTN

R10

B20

C4

FIGURE 3

C

Cm

C15

$r_0$    $r_{15}$    $r_{CTN}$

FIGURE 4

FIG.5

EP 0 908 131 A1

**EP 0 908 131 A1**

Office européen
des brevets

**RAPPORT DE RECHERCHE EUROPEENNE**

Numéro de la demande

EP 98 42 0171

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int.Cl.6) |
| X<br>A | DE 93 02 377 U (PETRA-ELECTRIC PETER HOHLFELDT GMBH & CO) 7 octobre 1993<br>* page 1, dernier alinéa - page 2, alinéa 3 *<br>* page 3, alinéa 4 - page 4, alinéa 4; figure *<br>--- | 1-4,8<br>7,9 | A47J37/08 |
| A | DE 196 12 379 A (ROWENTA-WERKE GMBH) 2 octobre 1997<br>* colonne 2, ligne 27 - colonne 3, ligne 23; figure 4 *<br>--- | 1,4,8,9 | |
| D,A | US 5 128 521 A (D.D. LANNO, M.F. KOLLAR) 7 juillet 1992<br>* abrégé; figure 1 *<br>--- | 1,4,9 | |
| A | DE 195 40 841 A (HIGH END SYSTEMS) 15 mai 1996<br>* colonne 6, ligne 5 - ligne 11; figure *<br>--- | 5 | |
| A | DE 31 47 622 A (LICENTIA PATENT-VERWALTUNGS-GMBH) 9 juin 1983<br>* abrégé; figure *<br>----- | 9 | **DOMAINES TECHNIQUES RECHERCHES** (Int.Cl.6)<br><br>A47J<br>H01H<br>H05B<br>G05D |

Le présent rapport a été établi pour toutes les revendications

| Lieu de la recherche | Date d'achèvement de la recherche | Examinateur |
|---|---|---|
| LA HAYE | 4 janvier 1999 | Schmitt, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 98 42 0171

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

04-01-1999

| Document brevet cité au rapport de recherche | | Date de publication | Membre(s) de la famille de brevet(s) | | Date de publication |
|---|---|---|---|---|---|
| DE 9302377 | U | 07-10-1993 | AUCUN | | |
| DE 19612379 | A | 02-10-1997 | AUCUN | | |
| US 5128521 | A | 07-07-1992 | CA | 1294658 A | 21-01-1992 |
| DE 19540841 | A | 15-05-1996 | GB | 2295058 A,B | 15-05-1996 |
| DE 3147622 | A | 09-06-1983 | AUCUN | | |

EPO FORM P0460

Pour tout renseignement concernant cette annexe : voir Journal Officiel de l'Office européen des brevets, No.12/82